(19) Europäisches Patentamt
European Patent Office
Office européen des brevets

(11) **EP 2 086 738 B1**

## (12) EUROPÄISCHE PATENTSCHRIFT

(45) Veröffentlichungstag und Bekanntmachung des Hinweises auf die Patenterteilung:
**12.12.2018 Patentblatt 2018/50**

(51) Int Cl.:
***B29C 44/28*** *(2006.01)* ***B29C 44/46*** *(2006.01)*
***B29K 75/00*** *(2006.01)*

(21) Anmeldenummer: **07819131.9**

(22) Anmeldetag: **19.10.2007**

(86) Internationale Anmeldenummer:
**PCT/EP2007/009066**

(87) Internationale Veröffentlichungsnummer:
**WO 2008/052670 (08.05.2008 Gazette 2008/19)**

(54) **VERFAHREN ZUR HERSTELLUNG VON POLYURETHAN-BLOCKSCHAUM**

METHOD FOR THE PRODUCTION OF POLYURETHANE BLOCK FOAM

PROCÉDÉ DE FABRICATION DE MOUSSE POLYURÉTHANE EN BLOC

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.10.2006 DE 102006051311**

(43) Veröffentlichungstag der Anmeldung:
**12.08.2009 Patentblatt 2009/33**

(73) Patentinhaber: **Hennecke GmbH**
**51379 Leverkusen (DE)**

(72) Erfinder:
• **WIRTH, Jürgen**
**51147 Köln (DE)**

• **SCHAMBERG, Martin**
**53757 Sankt Augustin (DE)**
• **KLAHRE, Horst**
**53757 St. Augustin (DE)**

(74) Vertreter: **Gosdin, Michael**
**Adam-Stegerwald-Strasse 6**
**97422 Schweinfurt (DE)**

(56) Entgegenhaltungen:
**DE-A- 19 525 664    DE-A1- 4 425 319**
**FR-A- 1 397 149    US-A- 5 844 015**
**US-A1- 2003 183 971**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Herstellung von Polyurethan-Blockschaum, bei dem das Reaktionsgemisch nach Durchströmen eines Mischers aus einer Ausströmöffnung frei ausfließt und dann eine Anstaukammer, in der ein statischer Druck aufgebaut wird, einen Spalt und schließlich eine Expansionskammer durchströmt.

Die kontinuierliche Herstellung von Polyurethan-Blockschaum arbeitet heute im Wesentlichen nach zwei unterschiedlichen Verfahren:

• der sogenannten Liquid-Laydown-Fahrweise sowie

• der Trog-Fahrweise.

Beide Verfahren werden z.B. im Kunststoff-Handbuch Band 7 aus dem Hanser-Verlag beschrieben. (3., neu bearbeitete Auflage, 1993, ISBN 3-446-16263-1, Seite 197-200).

Der wesentliche Unterschied dieser beiden Verfahren besteht darin, dass das flüssige Reaktionsgemisch bei der Trog-Fahrweise von unten in einen Trog eingetragen wird, aus dem es teilexpandiert über eine Überlaufkante auf das Bodenpapier austritt, während es bei der Liquid-Laydown-Fahrweise flüssig auf das Bodenpapier aufgetragen wird.

Ein grundsätzlicher Vorteil der Liquid-Laydown-Fahrweise ist darin zu sehen, dass im Gegensatz zur Trog-Fahrweise evtl. vorhandene Luftblasen im Reaktionsgemisch, welche zu Lunkern im späteren Schaum führen können, nach dem Austrag auf das Bodenpapier noch in die Atmosphäre entweichen können. Dies ist z.B. bei der Herstellung von Folienware (d.h. wenn der Schaumblock später in Folienware geschnitten wird) ein sehr wichtiger Vorteil, da Lunker hier schnell zu großen Ausschussmengen führen können.

Die Liquid-Laydown-Fahrweise wird heute in der Regel mit einer Rechteckeinrichtung betrieben, bei welcher im frühen Expansionsstadium des Polyurethan-Schaums (PUR-Schaums) Matten mit einer justierbaren Kraft auf den aufsteigenden Schaum aufgelegt werden, um dadurch einen möglichst rechteckigen Blockquerschnitt zu erzielen, welcher zu einer geringen Verschnittmenge führt. Dieses Verfahren wird ebenfalls im Kunststoff-Handbuch Band 7 (3., neu bearbeitete Auflage, 1993, ISBN 3-446-16263-1, Seite 197-200) sowie in GB-A-1392859 und GB-A-1487848 beschrieben und ist der Literatur als Hennecke-Planibloc-Rechteckverfahren bekannt.

Dieses Verfahren wurde in der Patentschrift DE-A-2557572 dahingehend verbessert, dass das Deckpapier bereits auf das noch flüssige Reaktionsgemisch aufgelegt wird, um Lufteinschlüsse aufgrund eines ungleichmäßigen Steigprofils beim ersten Kontakt des Schaumes mit dem Deckpapier zu vermeiden. Dabei wird das Deckpapier, noch bevor der Schaum zu steigen beginnt, so weit herabgeführt, dass zwischen Bodenpapier und Deckpapier ein Spalt entsteht, der so klein ist, dass sich das Reaktionsgemisch vor diesem Spalt leicht anstaut. Ein weiterer positiver Nebeneffekt dieses Spaltes ist seine Verteilwirkung. Das Anstauen von Reaktionsgemisch begünstigt das Verteilen des Reaktionsgemisches auf die volle Breite. Dabei ist das Deckpapier im Allgemeinen etwas schmaler ausgeführt als die Schäumbreite, so dass das Gemisch an den Seiten in Kontakt mit der Atmosphäre steht. Unter Schäumbreite versteht man dabei die Breite des auf dem Transportband oder Bodenpapier aufschäumenden Polyurethan-Reaktionsgemisches, die letztlich der Breite des entstehenden Schaums entspricht. Diese Breite wird durch den Abstand der seitlichen Formwände im Bereich der Aufschäum- und Aushärtezone definiert.

Ein Nachteil dieses Verfahrens ist die nicht optimale Altersverteilung des Reaktionsgemisches beim Eintritt in die Expansionszone. Bei einer ungleichmäßigen Anströmung ermöglicht dieses Verfahren zwar in der Regel die Verteilung des Gemisches auf die nötige Breite, dabei bleibt aber die Mengenverteilung über die Breite noch sehr inhomogen. In der Mitte fließt das Reaktionsgemisch mit höherer Geschwindigkeit und damit mit größerer Menge in die Expansionszone als in den Randbereichen. Dadurch startet der Schäumprozess in der Mitte erst weiter stromabwärts als in den Randbereichen. Da das untere Transportband dieser Anlagen in Produktionsrichtung grundsätzlich nach unten geneigt ist (entweder mit einem konstanten Winkel von z.B. 4° über die gesamte Produktionslänge oder aber einstellbar über verstellbare Platten, den sogenannten Fall-Plates, auf den ersten z.B. 6 - 8 Metern), kann dies dazu führen, dass die noch flüssigeren Gemischanteile mit einer höheren Dichte die leichteren Gemischanteile mit einer niedrigeren Dichte unterlaufen und immer weiter vorauseilen. Dies verursacht dann schwere Störungen im Schaum und führt zu Ausschuss. Diese Gefahr von vorauseilenden flüssigeren Gemischanteilen in der Mitte begrenzt somit den Neigungswinkel des unteren Transportbandes.

Gleichzeitig besteht aber auch die Gefahr, dass es bei einem zu steilen Steigprofil in der Expansionszone zu einem Materialrückfluss speziell in den Randbereichen kommen kann. Die begrenzte Steilheit des Steigprofiles bedeutet aber, dass Blockhöhe und Bandgeschwindigkeit in einem bestimmten Verhältnis stehen müssen.

Dabei ist zu beachten, dass man natürlich bestrebt ist, möglichst hohe Blöcke zu produzieren, da dadurch die Verluste in der Deckschicht und der Bodenschicht prozentual verringert werden. Die Blockhöhe ist ansonsten in erster Linie dadurch limitiert, dass sich mit steigender Blockhöhe die Dichteverteilung im Block verschlechtert, da auf den unteren Schichten während des Schäumens ein höherer Druck lastet als auf den oberen Schichten. Letztlich führen diese Randbedingungen also dazu, dass die Maschinen prozessbedingt mit einer bestimmten Mindestbandgeschwindigkeit von ca. 4 m/min und dementsprechend auch mit großen Austragsleistungen bis zu 500 kg/min betrieben werden müssen. Dies ist auch sinnvoll, solange die Maschine trotzdem mit guter Auslastung betrieben wird. In der Realität führt dies jedoch häufig dazu, dass die Anlagen nur wenige Stunden am Tag laufen, wodurch die Investitionskosten dann im Vergleich zu den übrigen Kosten verhältnismäßig groß werden, so dass eine kontinuierliche Blockschaummaschine erst bei einer relativ großen Jahresproduktion wirtschaftlich arbeitet.

Eine Verbesserung des Verfahrens konnte mit der in EP-A-0689920 beschriebenen Kalibrierplatte erzielt werden. Dadurch, dass das Reaktionsgemisch nun auf einer längeren Strecke durch einen Spalt strömt, verbessert sich die Verteilwirkung, so dass das schneller strömende Gemisch stärker abgebremst wird. Dennoch besteht auch hier nach wie vor das Problem, dass der Neigungswinkel nach unten durch die Gefahr des Unterlaufens von älterem Gemisch durch jüngeres Gemisch begrenzt ist und dass gleichzeitig bei einem zu flachen Neigungswinkel und einem zu steilen Steigprofil nach oben das Reaktionsgemisch in den Randbereichen im schlimmsten Fall entgegen der Förderrichtung zurückströmen kann. Deshalb sind auch bei diesem Verfahren relativ enge Grenzen bezüglich der erzielbaren Schaumhöhe in Abhängigkeit von der Bandgeschwindigkeit gesetzt.

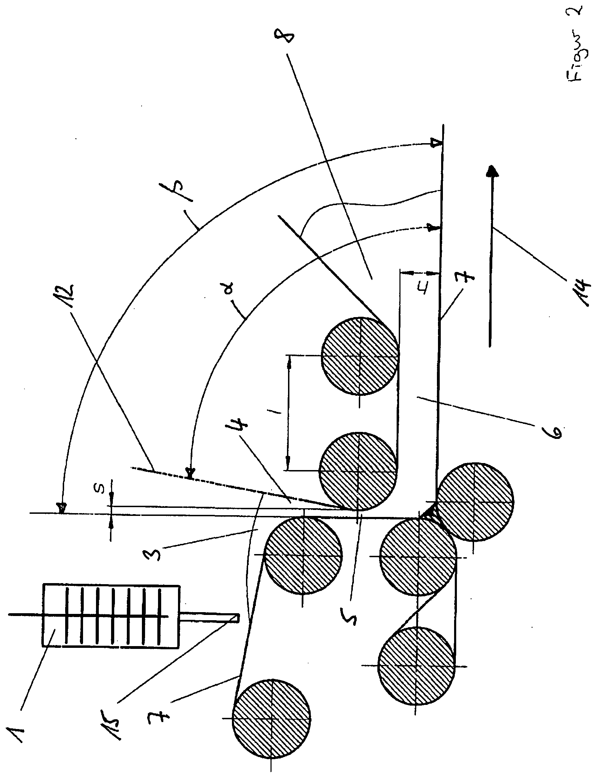

Ein Verfahren, das sich mit der Produktion von Blöcken mit steilem Steigprofil (mit dem Ziel der Erzielung möglichst hoher Blöcke) beschäftigt, wird in DE-A-2726084 beschrieben. In einer Ausführungsform dieses Verfahrens (Abbildung 2) wird das Gemisch von oben über ein Querverteilerrohr und ein Leitblech in einen rinnenförmigen Trog gefördert, aus dem es über ein Aufgabeblech auf die Bodenfolie gelangt, wobei es gemäß der Beschreibung (Seite 4) vor dem Auftragen anreagieren gelassen wird. Ferner ist gemäß Abbildung 2 zwischen dem Leitblech 36 und der Bodenfolie ein sichtbarer Spalt vorhanden, der es unmöglich macht, an dieser Stelle einen nennenswerten statischen Vordruck zu erzeugen. Sofern das Gemisch noch fließfähig ist, würde es bei einem nennenswerten statischen Vordruck durch diesen Spalt nach hinten fließen und dort ausreagieren, was den Lauf der Folie sehr behindern würde und wahrscheinlich zu einem Reißen oder Bandstillstand der Bodenfolie führen würde.

Der nächstliegende Stand der Technik zu der erfindungsgemäßen Lösung wird in EP-A-25084 offenbart. Der zwischen Gemischaufgabetisch und Querverteilorgan gebildete Spalt ähnelt in der Seitenansicht bei oberflächlicher Betrachtung der erfindungsgemäßen Anstaukammer.

Die Vorrichtung in EP-A-25084 stellt jedoch ein reines Verteilorgan dar, dessen Aufgabe ausschließlich darin besteht, das Gemisch bis zu der hinter dem Knick beginnenden Aufschäumzone auf die volle Breite zu verteilen. Eine vollständige Abdichtung gegen statischen Flüssigkeitsdruck im unteren Bereich des Spaltes sowie am Knick ist weder im Text erwähnt noch auf den Abbildungen erkennbar. Diese ist auch gar nicht notwendig, da bei den Betriebsbedingungen, für die das Verfahren entwickelt wurde und die auch in den Beispielen beschrieben werden, an den äußeren Rändern gar kein statischer Druck entsteht. Die Gesamtdicke der späteren Bahnen betrug lediglich 40 mm bei einer Dichte von 30 kg/m$^3$, so dass von der Aufschäumseite ein maximaler statischer Druck von 12 Pa entstehen kann. Dieser minimale statische Gegendruck in Verbindung mit der hohen Bandgeschwindigkeit sorgt bereits dafür, dass kein Materialrückfluss im Randbereich stattfinden kann und somit die der Erfindung zugrunde liegende Problematik gar nicht bestand.

Entsprechend weist die in EP-A-25084 beschriebene Vorrichtung keine allseitige Abdichtung im Übergangsbereich von Anstaukammer zur Expansionszone auf. Deshalb kann mit dieser Vorrichtung auch kein nennenswerter statischer Vordruck über die gesamte Schäumbreite aufgebaut werden, so dass bei steileren Steigprofilen Material in den Randbereichen zurückfließt.

Eine weitere gattungsgemäße Lösung ist aus der DE 44 25 319 A1 bekannt. Ein ähnliches Konzept offenbart die US 5 844 015 A.

Die der Erfindung zugrunde liegende Problematik einer langsam laufenden kontinuierlichen Blockschaummaschine wurde indes schon in der Patentschrift EP-A-1328388 aufgegriffen. Die dort vorgeschlagene Lösung eines geschlossenen Systems von der Dosiereinheit bis in die Expansionszone bringt aber Probleme mit sich:

- mögliche Pulsationen im System, welche z.B. aus der Dosiereinheit oder aber aus der Mischereinheit (z.B. durch Gasnester, die dann schwallartig mitgerissen werden) kommen können, können sich im Prinzip bis in die Expansionszone fortpflanzen, da es keine Entkopplung der Systeme durch den Kontakt mit der Umgebungsatmosphäre gibt;

- Gasblasen, die irgendwo im System entstehen können, können nicht mehr entweichen und führen zwangsläufig zu Lunkern im späteren Schaum;

- Es ist keineswegs trivial, das Gemisch in einem geschlossenem System mit guter Altersverteilung gleichmäßig auf 2 Meter Breite zu verteilen, und dabei die Ausbildung von Totzonen unter verschiedensten Betriebsbedingungen (Mengenströme, Viskositäten) zu vermeiden. In DE-A-69112786 Seite 5 wird darauf hingewiesen, dass beim offenen Trog, "über die Breite des Kanals gesehen, erhebliche Abweichungen hinsichtlich der Geschwindigkeit" vorliegen, "mit der das reagierende Schaumstoffgemisch aus dem Gefäßauslass zu der Fördereinrichtung strömt". Während dieser Nachteil beim offenen Trogbetrieb noch dadurch kompensiert werden kann, dass das Gemisch am Austritt aus dem Trog entlang der Grenzfläche zur Atmosphäre frei zur Seite fließen kann, ist dies im geschlossenen System so nicht mehr möglich. Hier ist tatsächlich die Gefahr größer, dass sich ein bevorzugter Kanal ausbildet, durch den der Hauptanteil des Reaktionsgemisches bevorzugt fließt, was dann zu einer sehr ungünstigen Altersverteilung führt.

Die technische Aufgabe der vorliegenden Erfindung besteht darin, ein Verfahren und eine Vorrichtung für die Herstellung von Polyurethan-Blockschaum bei niedrigen Bandgeschwindigkeiten von 0,5 bis 3 m/min unter Vermeidung der oben genannten Nachteile bereit zu stellen.

Deshalb wird in der erfindungsgemäßen Lösung die an sich für höhere Förderleistungen entwickelte Entkopplung des Dosier-, Misch- und Austragsbereichs von der Expansionszone angewendet. Der notwendige Druck, um Materialrückfluss bei steilerem Steigprofil und niedrigen Bandgeschwindigkeiten von 0,5 bis 3 m/min zu vermeiden, wird nicht von den Dosiervorrichtungen aufgebracht, sondern durch den aus der statischen Höhe resultierenden statischen Vordruck.

Die Erfindung betrifft ein kontinuierliches Verfahren zur Herstellung von Polyurethan-Blockschaum, gemäß Anspruch 1.

Dabei bedeutet "frei fließend" in Schritt a), dass das PUR-Reaktionsgemisch nicht von allen Seiten abgeschlossen ist, sondern Kontakt zur Umgebung, z.B. zur Atmosphäre hat. Dadurch wird die oben erwähnte, zur Vermeidung von Lunkern sehr vorteilhafte Filmentgasung möglich und der Expansionsbereich wird von der Dosier- und Mischereinheit entkoppelt.

In einer möglichen Ausgestaltung des erfindungsgemäßen Verfahrens strömt das Polyurethangemisch nach der Vermischung im Mischer zunächst noch durch einen Schlauch oder eine Rohrleitung sowie ggf. auch durch ein Druckeinstellorgan wie z.B. eine Drossel, bevor es durch die Ausströmöffnung frei fließend ausgetragen wird.

Der statische Druck, der am Boden der Anstaukammer erzeugt wird, liegt wie genannt in einem Bereich von 100 bis 5000 Pascal, bevorzugt von 150 bis 3000 Pascal und besonders bevorzugt von 200 bis 2000 Pascal. Am Boden der Anstaukammer herrscht dann ein absoluter Druck, der der Summe aus dem Umgebungsdruck und dem statischen Druck entspricht. Durch das erfindungsgemäße Verfahren ist gewährleistet, dass sich ein ausreichender statischer Vordruck über die gesamte Breite der Anstaukammer aufbaut, da nur dadurch ein Rückfließen auch in den Randbereichen sicher verhindert werden kann.

Der Begriff des statischen Vordrucks bedeutet im Rahmen dieser Erfindung den Druck, den die Flüssigkeitssäule in der Anstaukammer im statischen Zustand ausüben würde. Er lässt sich demnach nach der Formel

$$p = \rho \cdot g \cdot h$$

berechnen, wobei h das Längen-Maß vom oberen Flüssigkeitsspiegel, also der Grenzfläche des Reaktionsgemisches zur Atmosphäre, zum Boden der Anstaukammer (repräsentiert durch die Spaltöffnung) darstellt. Bei einer mittleren Dichte von beispielsweise 1100 kg/m$^3$ und der Erdbeschleunigung von 9,81 m/s$^2$ ergäbe sich also z.B. bei einer Flüssigkeitssäule von 5 cm ein statischer Vordruck von 540 Pascal. Zusätzlich wirken natürlich die Schleppkräfte des Papiers auf das Reaktionsgemisch. Außerdem sinkt der tatsächliche statische Druck lokal je nach Spaltmaß durch den dynamischen Anteil $\frac{\rho}{2}v^2$.

Ein statischer Vordruck von 100 Pascal an den Seiten genügt, um 30 cm Steighöhe bei einer Rohdichte von 20 kg/m$^3$ zu kompensieren und dadurch ein relatives Fließen von Reaktionsgemisch zur Trennbahn in entgegengesetzter Richtung zur Förderrichtung sicher zu vermeiden.

Deshalb sollte der statische Druck am Boden der Anstaukammer auch im Randbereich bevorzugt mindestens 100 Pascal betragen, was einer Flüssigkeitssäule von ca. 1 cm entspricht. Da das Reaktionsgemisch die vertikal geneigte Anstaukammer aber möglichst noch im Wesentlichen flüssig verlassen soll, darf die Anstaukammer auch nicht zu lang ausgeführt werden.

Die Anstaukammer muss natürlich in vertikaler Richtung ausgedehnt sein, denn nur so ist es möglich bei definierter, begrenzter Verweilzeit einen statischen Vordruck zu erzeugen. Dementsprechend benötigt die Anstaukammer neben den seitlichen begrenzenden Wänden eine zur Horizontalen geneigte Rückwand sowie eine zur Horizontalen geneigte Vorderwand.

Bevorzugt wird wenigstens eine seitliche Begrenzungsfläche der Anstaukammer, d.h. wenigstens die in Produktionsrichtung vordere und/oder hintere Begrenzungsfläche und/oder wenigstens eine seitliche Begrenzungsfläche, durch ein Transportband bzw. eine darauf geführte Trennbahn, beispielsweise eine Papierbahn, aufgespannt. In diesem Fall ist die Anstaukammer bevorzugt nur so lang ausgedehnt, dass das Reaktionsgemisch, welches mit der durch die Anstaukammer gezogenen Trennbahn in Kontakt ist, nach maximal 10 Sekunden, bevorzugt nach maximal 5 Sekunden die Anstaukammer wieder verlässt. Diese Gemischanteile fließen nämlich im Wesentlichen mit der Bandgeschwindigkeit durch die Anstaukammer. Da außerdem auch verfahrenstechnisch keine Notwendigkeit für einen statischen Vordruck oberhalb von 5000 Pascal besteht, stellt dieser Wert von 5000 Pascal für den statischen Druck am Boden der Anstaukammer die Obergrenze für eine vorteilhafte Ausgestaltung des Verfahrens dar. 5000 Pascal entsprechen dabei unter den oben genannten Voraussetzungen einer Flüssigkeitssäule von ca. 50 cm.

Das Reaktionsgemisch kann prinzipiell aus dem Mischer direkt durch die Aufgabeöffnung in die Anstaukammer ausgetragen werden. Das Reaktionsgemisch kann aber auch prinzipiell in einer bevorzugten Ausführungsform sowohl auf die Trennbahn, welche die in Produktionsrichtung hintere Begrenzung der Anstaukammer als auch auf die Trennbahn, welche die in Produktionsrichtung vordere Begrenzung der Anstaukammer bildet, oder aber auch auf beide Trennbahnen gleichzeitig ausgetragen werden. Daher sind die bevorzugten Bereiche der Neigungswinkel der jeweiligen Trennbahnen im Bereich der Anstaukammer symmetrisch zur Vertikalen angeordnet.

Der Neigungswinkel $\alpha$ der hinteren Trennbahn, welche die in Produktionsrichtung gesehen hintere Begrenzungsfläche der Anstaukammer bildet, gegenüber der Horizontalen, sollte dabei bevorzugt in einem Bereich zwischen 10° und 170°, besonders bevorzugt zwischen 20° und 160° und ganz besonders bevorzugt zwischen 45° und 135° liegen.

Ebenso sollte der Neigungswinkel $\beta$ der vorderen Trennbahn, also der in Produktionsrichtung gesehen vorderen Begrenzungsfläche der Anstaukammer, gegenüber der Horizontalen, bevorzugt in einem Bereich zwischen 10° und 170°, besonders bevorzugt zwischen 20° und 160° und ganz besonders bevorzugt zwischen 45° und 135° liegen.

Der Spalt, den das Polyurethan-Reaktionsgemisch nach dem Austritt aus der Anstaukammer durchströmt, kann im einfachsten Fall durch den engsten Querschnitt zwischen der oberen Trennbahn, die über eine einfache Umlenkrolle bzw. -walze gezogen wird, und der unteren Trennbahn gebildet werden.

Bevorzugt weist der Spalt aber eine horizontale Ausdehnung in Strömungsrichtung von 5 bis 100 cm und besonders bevorzugt von 10 bis 50 cm auf und ist im wesentlichen horizontal ausgebildet. Im Idealfall strömt das Reaktionsgemisch dann praktisch ohne Relativgeschwindigkeit zu der oberen und unteren Trennbahn in die nachfolgende Expansionszone ein.

Der Spalt kann dabei als flacher Kanal oder aber auch als Spalt mit einem sich progressiv erweiternden Querschnitt ausgeführt sein, damit die höheren Geschwindigkeiten des Reaktionsgemisches beim Ausströmen aus der vertikal geneigten Anstaukammer ohne Strömungsablösungen reduziert werden. In dieser bevorzugten Ausführung des erfindungsgemäßen Verfahrens dient dieser Spalt als Puffer- und Beruhigungszone zwischen der Anstaukammer und der Expansionszone. Die Spalthöhe h ist dabei bevorzugt einstellbar und wird vorteilhaft so eingestellt, dass die Spalthöhe h in Abhängigkeit von der Schäumbreite b, der Bandgeschwindigkeit $v$ und dem Volumenstrom $\dot{V}$ gemäß der Formel

$$h = k \cdot \frac{\dot{V}}{b \cdot v}$$

eingestellt wird, wobei der Faktor k bevorzugt in einem Bereich zwischen 0,8 und 1.2 und besonders bevorzugt zwischen 0.9 und 1.1 liegt und wobei k vom Fachmann leicht experimentell bestimmt werden kann. Unter Schäumbreite versteht man wiederum die Breite des auf dem Transportband oder Bodenpapier aufschäumenden Polyurethan-Reaktionsgemisches, die letztlich der Breite des entstehenden Schaums entspricht. Diese Breite wird durch den Abstand der seitlichen Formwände im Bereich der Aufschäum- und Aushärtezone bestimmt. Typischerweise liegen die Schäumbreiten in einem Bereich zwischen 1,5 und 2,5 Metern.

Dabei muss das Reaktionsgemisch im Wesentlichen flüssig die Anstaukammer verlassen, da es ansonsten aufgrund der dann abnehmenden Dichte in der Anstaukammer tendenziell entgegen der Förderrichtung nach oben strömen möchte. Der Spalt hilft dabei, dass das Reaktionsgemisch über die gesamte Breite möglichst mit einheitlicher Geschwindigkeit und möglichst ohne Relativgeschwindigkeit zu den Trennbahnen, in die Expansionszone strömt.

Das Polyurethan-Reaktionsgemisch ist also bis zum Austritt aus der Anstaukammer im Wesentlichen flüssig, d.h. das Reaktionsgemisch ist bis diesem Zeitpunkt um weniger als 10%, bevorzugt weniger als 5% gegenüber dem Ausgangszustand expandiert.

Dabei ist das Polyurethan-Reaktionsgemisch während der Durchströmung in dem System umfassend die Anstaukammer, den Spalt und die Expansionskammer eingeschlossen, das nur durch die Aufgabeöffnung und die Austrittsöffnung zur Umgebung hin geöffnet ist. Das bedeutet, dass auch an den Verbindungsstellen zwischen Anstaukammer, Spalt und Expansionskammer kein PUR-Reaktionsgemisch austreten kann.

In einer bevorzugten Ausführungsform des erfindungsgemäßen Verfahrens erstreckt sich der Spalt im Wesentlichen über die gesamte Breite des Transportbandes. Ebenfalls bevorzugt erstreckt sich die Breite der Expansionskammer im Wesentlichen über die gesamte Breite des Transportbandes.

Der Begriff Transportband umfasst auch beispielsweise eine gegebenenfalls vorhandene Trennbahn wie beispielsweise ein Bodenpapier, das über das Transportband geführt wird. Die Begriffe Transportband und Trennbahn werden daher als äquivalente Begriffe benutzt.

In einer bevorzugten Ausführungsform des Verfahrens ist die Spaltöffnung am Ausgang aus der Anstaukammer als enger Kalibrierspalt ausgeführt. Mit Hilfe dieses bevorzugt verstellbaren Spalts lassen sich die statische Höhe und damit der statische Druck beeinflussen. Insbesondere lässt sich damit Einfluss auf das Verhältnis des statischen Druckes in der Mitte zum statischen Druck an den Seiten nehmen, was dann wiederum direkt Einfluss auf die Mengenverteilung über der Breite hat. Je stärker der Spalt in Richtung der Erdbeschleunigung ausgerichtet ist, desto enger kann er gewählt werden und umso besser ist seine Verteilwirkung. Die Spaltweite dieses Kalibrierspaltes sollte bevorzugt zwischen 0,5 und 30 mm, und besonders bevorzugt zwischen 1 und 20 mm liegen. Dabei wird die Spaltweite bevorzugt in Abhängigkeit von der Schäumbreite b, der Viskosität η, dem Neigungswinkel δ des Transportbandes (Trennbahn) im Bereich des Spaltes in Produktionsrichtung gegenüber der Horizontalen und dem Volumenstrom $\dot{V}$ des Reaktionsgemisches so eng gewählt, dass der Spalt ein zusätzliches Anstauen des Gemisches bewirkt. Die Spaltweite s sollte daher bevorzugt gemäß der Ungleichung

$$s < \sqrt[3]{\frac{12 \cdot \eta \cdot \dot{V}}{b \cdot g \cdot \rho \cdot \sin \delta}}$$

eingestellt werden, wobei g die Erdbeschleunigung und $\rho$ die Dichte des Reaktionsgemisches ist. Die Viskositäten der eingesetzten Polyurethanreaktionsgemische liegen in der Regel in einem Bereich von 100 bis 1000 mPas. Bestimmen lässt sich die Viskosität z.B. mittels Rotationsviskosimetern nach DIN-EN-ISO-3219 bei einer Scherrate von 100 $s^{-1}$. Allerdings muss bei der Bestimmung der Viskosität von Polyurethan-Reaktionsgemischen auf die Zugabe von Wasser und Aktivatoren und ggf. auch Stabilisatoren verzichtet werden, damit die Reaktion zwischen den Reaktionspartnern so träge wird, dass das Messverfahren überhaupt durchgeführt werden kann. Deshalb müssen die Messungen ohne die Rezepturbestandteile Katalysatoren, Wasser und Stabilisatoren durchgeführt werden. Da diese aber in der Regel weniger als 5 Gewichtsprozent der Gesamtmenge ausmachen, kann der so ermittelte Wert für die Viskosität mit genügender Genauigkeit als Bezugswert für die Auslegungsformel herangezogen werden. Da das Reaktionsgemisch des Weiteren erfindungsgemäß den Spalt im Wesentlichen flüssig durchströmt, wird auch der mit dem Reaktionsfortschritt einhergehende Viskositätsanstieg vernachlässigt.

Das System verhält sich insgesamt im Prinzip wie hydraulisch kommunizierende Röhren. Dabei stellt sich ein stationäres Kräftegleichgewicht zwischen dem statischen Druck des flüssigen Reaktionsgemisches auf der Einströmseite sowie dem statischen Druck des expandierenden Schaumes in der Expansionszone ein, wobei aber zusätzlich noch die Reibkräfte der Trennbahn auf das Gemisch sowie die Impulskräfte der Strömung wirken. Aufgrund der großen Dichteunterschiede des flüssigen Reaktionsgemisches im Vergleich zum expandierten Schaum genügt eine Höhe von wenigen cm auf der Einströmseite (in der Anstaukammer), um den statischen Druck in der Expansionszone zu kompensieren. Die Schaumhöhe, also die Höhe des expandierten Schaums liegt dabei üblicherweise in einem Bereich zwischen 0,7 m bis 1,5 m. Ohne eine enge Kammerung dieses Bereiches (d.h. der Anstaukammer) würde aber der statische Druck aus der Anstaukammer dazu führen, dass das im Wesentlichen flüssige Reaktionsgemisch auf der Einströmseite weitflächig verläuft und so ein großer See aus Reaktionsgemisch mit einer zu großen mittleren Verweilzeit entsteht.

Die Anstaukammer ermöglicht es also in Verbindung mit dem Spalt, den nötigen Vordruck über die gesamte Breite des Spalts zu erzeugen, ohne Probleme aus einer zu großen und uneinheitlichen Verweilzeit zu bekommen.

Der entscheidende Vorteil der Erfindung gegenüber den Verfahren gemäß dem Stand der Technik ist darin zu sehen, dass es durch die zusätzliche statische Höhe in der Anstaukammer vor dem Eintritt in den im wesentlichen horizontalen Kalibrierspalt gelingt, die Triebkräfte für ein relatives Fließen gegenüber der Trennbahn über der Breite zu homogenisieren.

Die Erfindung betrifft auch eine Vorrichtung zur Herstellung von Polyurethan-Blockschaum gemäß Anspruch 9.

Der Mischer enthält eine Ausströmöffnung für den frei fließenden Austrag des Polyurethan-Reaktionsgemisches aus dem Mischer. Das bedeutet, dass die Austrittsöffnung aus dem Mischer hinsichtlich der Aufgabeöffnung in die Anstaukammer bevorzugt so angeordnet ist, dass das Polyurethan-Reaktionsgemisch frei fließend aus der Austrittsöffnung in die Aufgabeöffnung fließen kann, wobei zwischen Ausströmöffnung und Anstaukammer durchaus weitere Bauteile, wie beispielsweise ein gegen die Horizontale geneigtes Aufgabe-Transportband oder eine gegen die Horizontale geneigte Aufgabeplatte, angeordnet sein können. Die Fließstrecke des Polyurethan-Reaktionsgemisches zwischen Austrittsöffnung und Aufgabeöffnung ist kein geschlossenes System, so dass Gase aus dem Polyurethan-Reaktionsgemisch entweichen können. Die Ausströmöffnung kann beliebige Formen haben, bevorzugt sind die Form der Spaltöffnung, der runden oder der elliptischen Öffnung.

In einer möglichen Ausführungsform der erfindungsgemäßen Vorrichtung ist zwischen dem eigentlichen Mischorgan und der Ausströmöffnung noch ein Schlauch oder eine Rohrleitung sowie ggf. auch durch ein Druckeinstellorgan wie z.B. eine Drossel, angeordnet.

Bevorzugt erstreckt sich die Expansionskammer (8) im Wesentlichen über die Schäumbreite b, d.h. ihre Breite beträgt bevorzugt wenigstens 90% des Abstandes der seitlichen Formwände in der Aufschäum- und Aushärtezone.

Das Volumen der Anstaukammer wird in Abhängigkeit vom Volumenstrom $\dot{V}$ bevorzugt so gewählt, dass die Verweilzeit t des Polyurethan-Reaktionsgemisches in der Anstaukammer maximal 10 Sekunden, bevorzugt maximal 5 Sekunden beträgt. Dementsprechend wird das Volumen der Anstaukammer bevorzugt gemäß der Ungleichung

$$V \leq \dot{V} \cdot t_{max}$$

ausgelegt, wobei der Wert für $t_{max}$ bei 10 Sekunden und bevorzugt bei 5 Sekunden liegt. Die Volumenströme können je nach Bandgeschwindigkeiten zwischen 30 und 500 kg/min liegen. Bevorzugt liegen die Volumenströme zwischen 50 und 250 kg/min.

Die Erfindung wird nachstehend anhand der folgenden Abbildungen näher erläutert.

Es zeigen

Figur 1     eine dreidimensionale Ansicht des erfindungsgemäßen Verfahrens sowie der erfindungsgemäßen Vorrichtung.

Figur 2     eine zweidimensionale Ansicht des erfindungsgemäßen Verfahrens.

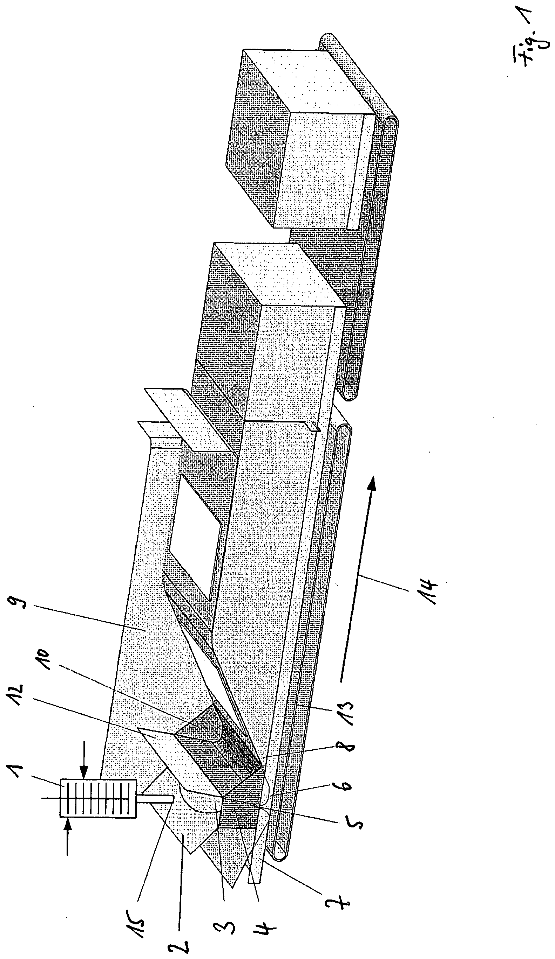

In Figur 1 ist eine mögliche Ausführungsform des erfindungsgemäßen Verfahrens dargestellt.

Die Dosieraggregate, die Tanks und sonstige Elemente für die Verarbeitung der Reaktivkomponenten sowie der diversen Zusatzkomponenten sind in Figur 1 nicht dargestellt.

Dabei wird die Dichtigkeit der Anlage im Bereich der Anstaukammer 4, des Spalts 6 und der Expansionskammer 8 gegenüber der Atmosphäre mit Hilfe eines z.B. aus Blechen gefertigten Führungskäfigs 10 erreicht. Das Polyurethan-Reaktionsgemisch wird aus dem Mischer 1 durch die mindestens eine Austrittsöffnung 15 auf eine bewegte Aufgabe-Trennbahn 2 ausgetragen und strömt dann frei fließend durch die obere Aufgabeöffnung 3 in die sich konisch nach unten verjüngende Anstaukammer 4. Der Strömungsraum der Anstaukammer 4 ist durch die obere Aufgabeöffnung 3, die Seitenwände des Führungskäfigs 10 sowie die entlang der Rückwand des Führungskäfigs geführte Aufgabe-Trennbahn 2, die entlang der vorderen Wand des Führungskäfigs geführte hintere oder obere Trennbahn 12 sowie durch eine untere Spaltöffnung 5 begrenzt. Anschließend wird das Reaktionsgemisch umgelenkt und strömt durch den horizontalen Spalt 6, bevor es in die Expansionszone 8 strömt. Die Expansionskammer 8 wird durch die Seitenwände des Führungskäfigs 10 sowie nach oben durch die entlang der vorderen Wand des Führungskäfigs geführte obere oder Decktrennbahn 12, und nach unten durch eine von hinten zugeführte Trennbahn 7, die an den Seiten hochgekantet wird, um hinter dem Führungskäfig einen dichten Übergang zur seitlichen Trennbahn 9 zu gewährleisten. Die Produktionsrichtung wird durch Pfeil 14 angezeigt.

Gleichzeitig wird die Aufgabe-Trennbahn 2, auf welche das Gemisch zunächst ausgetragen wurde, nach hinten abgeführt. Die von hinten zugeführte Trennbahn 7 ermöglicht die Abdichtung gegenüber dem Antriebsband 13. Nachdem der teilweise expandierte Schaumstoffstrang den Führungskäfig 10 verlassen hat, übernimmt das Seitenpapier 9 die seitliche Abdichtung. Diese Ausführung mit einem Führungskäfig 10 stellt eine relativ einfache Variante des Verfahrens dar, um von der Anstaukammer 4 bis zur Expansionszone 8 die Dichtigkeit zur Atmosphäre in diesem Bereich erreichen zu können.

Auf der Einströmseite kann sich nun soviel statischer Vordruck aufbauen, dass das Reaktionsgemisch ohne nennenswertes relatives Fließen gegenüber der Trennbahn 7 in die Expansionszone 8 gefördert wird. Solange das Reaktionsgemisch fließfähig ist, muss der Schaumblock auch nach Verlassen des Führungskäfigs 10 je nach Steilheit des Steigprofils noch weiter nach hinten abgestützt werden, um ein Zurückfließen von Material im oberen Bereich zu verhindern. Zu diesem Zweck können in diesem Bereich z.B. Matten mit einer leichten, einstellbaren Kraft auf das Deckpapier aufgelegt werden.

Denkbar ist natürlich auch, auf den Führungskäfig 10 zu verzichten und die Trennbahnen stattdessen z.B. über Umlenkrollen bzw. -walzen zu führen. Die seitliche Abdichtung könnte auch schon im Bereich der Anstaukammer von der von hinten zugeführten Trennbahn 7 übernommen werden, wenn dieses hoch genug aufgekantet ist.

Vorteilhaft ist es, insbesondere die Trennbahnen so flexibel zu führen, dass die Kontur des Strömungsraumes im Bereich von der Anstaukammer 4 bis zur Expansionszone 8 vielfältig verstellt werden kann. Wichtig ist dabei aber, dass die Trennbahnen im Bereich der Anstaukammer 4 bis zur Expansionszone 8 an den Übergängen in geeigneter Weise abgedichtet sind.

Die wichtigsten Prozessparameter ergeben sich aus Figur 2, welche eine mögliche Ausführungsform des erfindungsgemäßen Verfahrens in zweidimensionaler Darstellung zeigt.

Das Reaktionsgemisch wird frei fließend aus dem Mischer 1 durch die Austrittsöffnung 15 direkt auf die Trennbahn 7 aufgetragen und fließt dann als Film durch die Aufgabeöffnung 3 von oben in eine vertikal geneigte Anstaukammer 4. Diese ist in diesem Fall konisch ausgeführt, wobei die hintere oder obere Trennbahn 12 in diesem Fall einen Neigungswinkel $\alpha = 80°$ gegenüber der Vertikalen aufweist, während die Trennbahn 7 nach Umlenkung im Bereich der Anstaukammer 4 einen Neigungswinkel $\beta = 90°$ gegenüber der Horizontalen aufweist. Die konische Anstaukammer 4 mündet in einen kurzen vertikal ausgerichteten Kalibrierspalt mit der Spaltöffnung 5. Je enger dieser Kalibrierspalt eingestellt wird, d.h. je kleiner das in Figur 2 dargestellte Maß s gewählt wird, umso höher staut sich das Gemisch in der Anstaukammer 4 und umso besser ist der Verteilereffekt des Kalibrierspaltes. Hinter dem vertikal ausgerichteten Kalibrierspalt mit der Spaltöffnung 5 wird das Gemisch umgelenkt und strömt in den horizontal verlaufenden Spalt 6 der Länge 1 und der Höhe h. Die Höhe h wird vorzugsweise so eingestellt, dass das Gemisch diesen Spalt möglichst ohne Relativgeschwindigkeit zur oberen Trennbahn 12 und zur Trennbahn 7 durchströmen kann. Am Austrittquerschnitt dieses Spaltes strömt das Reaktionsgemisch dann in die Expansionskammer 8. Die Produktionsrichtung wird durch Pfeil 14 angezeigt.

Aufgrund des statischen Vordruckes ist es nun im Prinzip sogar möglich, das Antriebsband (nicht gezeigt in Figur 2) und somit auch die untere Trennbahn 7 in Produktionsrichtung 14 nach oben geneigt einzustellen, da ein Materialrückfluss sicher vermieden wird. Dadurch kann jedes Vorlaufen von flüssigem Gemisch im Bodenbereich sicher vermieden werden, da dann die flüssigeren Gemischanteile relativ zu den bereits teilexpandierten Gemischanteilen eher entgegen der Produktionsrichtung fließen möchten. Das bedeutet, dass sich der Schaum bezogen auf die Altersverteilung aufgrund des Schwerkrafteinflusses tendenziell richtig "sortiert", da das jüngere flüssigere Gemisch eher gebremst wird gegenüber dem älteren bereits teilexpandiertem Gemisch.

Im Gegensatz dazu musste bisher in diesem Bereich in der Regel mit einem nach unten geneigten Transportband gefahren werden, da es ansonsten auf der Einströmseite zu einem Zurückfließen von Gemischanteilen kommen würde. Die Konsequenz des nach unten geneigten Transportbandes in diesem Bereich ist aber, wie bereits weiter vorne erläutert, die Gefahr des Unterlaufens von bereits teilexpandierten, älteren Gemischanteilen durch noch flüssige, jüngere Gemischanteile, da die noch flüssigeren Gemischanteile bei in einem Produktionsrichtung nach unten geneigten Transportband aufgrund der höheren Dichte eine stärkere Treibkraft für ein Fließen in Produktionsrichtung haben als die bereits teilexpandierten Gemischanteile.

In einer bevorzugten vorteilhaften Ausgestaltung des Verfahrens ist das Bodenpapier deshalb im Bereich des Spaltes 6 in Produktionsrichtung um 0,1° bis 5°, besonders bevorzugt um 0,2° bis 4° und ganz besonders bevorzugt um 0,5 bis 2° gegenüber der Horizontalen nach oben geneigt.

Das untere Transportband 7 kann im weiteren Verlauf dann entweder mit konstantem Neigungswinkel weiterlaufen oder aber auch über eine einstellbare Fall-Plate-Strecke mit variablen Neigungswinkeln weiterlaufen. Der Vorteil der Fall-Plate-Strecke, welche in der Regel aus vier bis sechs im Neigungswinkel verstellbaren Bodenblechen besteht, ist in einer etwas besseren Dichteverteilung zu sehen, da das Gemisch abgestimmt auf das Steigprofil des Polyurethan-Schaums nach unten expandieren kann, so dass die Reibkräfte des Seitenpapiers 9 auf den Schaum dem Anstieg des Druckgradienten aufgrund des unten höheren statischen Druckes, entgegenwirken und nicht wie bei nach oben expandierendem Schaum in die gleiche Richtung wirken. Aus diesem Grund können bei einer Fall-Plate-Strecke zur Erzielung eines guten Rechteckeffekts in der Regel die Matten im Bereich der Expansionszone 8 mit weniger Kraft aufgelegt werden als bei einer Anlage mit konstantem Neigungswinkel des unteren Transportbandes 7. Dabei ist aber auch bei der Einstellung der Fall-Plates natürlich wieder darauf zu achten, dass die Neigungswinkel je nach Reaktionsfortschritt nicht zu steil eingestellt werden dürfen, da es ansonsten wieder zu einem Unterlaufen von älterem Gemisch durch jüngeres Gemisch kommen kann. Allerdings wird ein Unterlaufen umso unwahrscheinlicher, je weiter die Reaktion fortgeschritten ist.

In einer besonders vorteilhaften Ausgestaltung des Verfahrens, die in Figur 2 gezeigt ist, kommt der Schaum nach dem frei fließenden Austrag in Atmosphärenumgebung nur noch mit bewegten Bahnen sowie ggf. Dichtungen in den Eckbereichen in Kontakt. Das PUR-Reaktionsgemisch wird dabei direkt auf die Trennbahn 7 aufgetragen und die Trennbahn 7 dann mehrfach umgelenkt, so dass sie als Begrenzungsfläche der Anstaukammer 4 und des Spalts 6 dient. Eine separate Aufgabe-Trennbahn ist bei dieser Ausführungsform nicht erforderlich. Dann wird die Trennbahn 7 allerdings bevorzugt unter Zugbeanspruchung auf der Innenseite eines Knickes bzw. einer Rundung entlanggeführt. Dies ist z.B. möglich, wenn das Bodenpapier außen so geführt bzw. niedergehalten wird, dass es diesem Knick bzw. inneren Radius auch folgt. Zusätzlich oder alternativ kann die Trennbahn 7 mit Hilfe von Vakuum auf der Kontur gehalten werden, der es folgen soll. Damit die außenliegende Führung bzw. der Niederhalter nicht mit Reaktionsgemisch in Kontakt kommt, muss im Bereich der Anstaukammer das Seitenpapier (Seitenpapier nicht dargestellt in Figur 2, entspricht aber dem Seitenpapier 9 in Figur 1) von der Seite zugeführt werden und für die seitliche Abdichtung in diesem Bereich sorgen.

Ggf. muss dann zwischen dem seitlich zugeführten, und zunächst nach innen laufendem Seitenpapier und der die Anstaukammer 4 vertikal nach unten durchlaufenden Trennbahn 7 ein reibungsarmes Dichtmaterial wie z.B. Teflontafelmaterial angebracht sein, damit die beiden Trennbahnen mit unterschiedlichen Förderrichtungen (Trennbahn 7 nach unten und Seitenpapier nach innen) problemlos aneinander vorbeigleiten können. Hinter dem Knick kann die Trennbahn 7 dann in Form einer U-Faltung aufgekantet werden. Auf diese Weise ist der Bereich der Anstaukammer 4 und des Spaltes 6 nach hinten bzw. unten durch die Trennbahn 7 abgedichtet. Zu den Seiten ist der Bereich der Anstaukammer 4 und des Spaltes 6 durch die im Bereich der vertikal ausgerichteten Anstaukammer 4 seitlich einlaufenden Seitenpapiere (Seitenpapiere nicht dargestellt in Figur 2, entspricht aber dem Seitenpapier 9 in Figur 1) und nach oben bzw. vorne durch die von oben in die Anstaukammer zugeführte hintere bzw. obere Trennbahn 12 abgedichtet. Im Bereich der Übergänge von Trennbahn 7 zu Seitenpapier 9 bzw. von hinterer oder oberer Trennbahn 12 zum Seitenpapier 9 sind ggf. Lippendichtungen vorzusehen, die für eine ausreichende Abdichtung gegenüber dem Reaktionsgemisch bei dem vorherrschenden statischen Druck sorgen.

Eine andere Möglichkeit die Trennbahn 7 so zu führen, dass es dem Knick bzw. der Rundung folgt, wäre eine Umlenkung über z.B. drei Walzen (wie in Figur 2 gezeigt), wobei dann zwischen der ersten und der dritten Walze eine geeignete Abdichtung vorhanden sein muss (evtl. auch ein Abstreifer, der das Bodenpapier auf der ersten Walze abstreift), damit die zweite Walze, welche ohne geeignete Abdichtung mit dem Strömungsraum verbunden wäre, vor dem Reaktionsgemisch geschützt wird. Vorteilhafterweise besitzt die zweite Walze, welche mit der potenziell benetzten Trennbahn in Berührung kommt, eine geeignete Beschichtung, auf der das Reaktionsgemisch schlecht haftet.

Eine weitere Alternative für die Führung der Trennbahn 7 in diesem Bereich nutzt die Tatsache aus, dass in der Regel zweischichtiges Papier benutzt wird, bei dem eine dünne Folie auf einem Kraftpapier aufgebracht ist. Dabei kann das Kraftpapier außen um ein gebogenes Winkelprofil gezogen werden, während die Folie innen entlang läuft und dadurch das Profil von dem Polyurethan-Reaktionsgemisch trennt. Diese Ausführung hätte den großen Vorteil, dass tatsächlich keine Bauteile außer den Trennbahnen mit dem Reaktionsgemisch in Kontakt kommen. Natürlich könnte man auch die Figur 2 dargestellte Anordnung so betreiben, dass nur das Kraftpapier, nicht aber die mit dem Polyurethan-Reaktionsgemisch in Kontakt stehende dünne Folie, um die hintere Walze geführt wird und die Folie stattdessen direkt nach vorne weiter läuft. In diesem Fall würde die Folie im Bereich der ersten der drei Walzen von dem Kraftpapier getrennt und im Bereich der dritten Walze wieder auf dieses aufgelegt.

In einer weiteren vorteilhaften Ausgestaltung des Verfahrens wird die hintere bzw. obere Trennbahn 12 im Vergleich zur Trennbahn 7 und zum Seitenpapier mit einer höheren Geschwindigkeit gezogen. Auf diese Weise lässt sich der Effekt kompensieren, dass die Geschwindigkeitskomponente des Deckpapiers in Produktionsrichtung in der Steigzone um den Faktor $\cos \sigma$ kleiner ist als die Geschwindigkeit, mit der das Deckpapier gezogen wird.

Das erfindungsgemäße Verfahren lässt sich besonders vorteilhaft für niedrige Bandgeschwindigkeiten in einem Bereich von 0,5 bis 3 m/min, bevorzugt 0,8 bis 3 m/min und besonders bevorzugt 1 bis 3 m/min einsetzen.

**Patentansprüche**

1. Kontinuierliches Verfahren zur Herstellung von Polyurethan-Blockschaum, bei dem die Reaktivkomponenten Polyol und Isocyanat dosierend zu einem Mischer (1) gefördert werden und darin zu einem Polyurethan-Reaktionsgemisch vermischt werden und das Polyurethan-Reaktionsgemisch auf ein Transportband (7) aufgetragen wird, darauf aufschäumt und aushärtet, wobei

   a) das Polyurethan-Reaktionsgemisch nach der Vermischung aus dem Mischer (1) durch mindestens eine Ausströmöffnung (15) frei fließend ausgetragen wird und durch die Aufgabeöffnung (3) in eine Anstaukammer (4) hinein fließt, die in vertikaler Richtung ausgedehnt und nach den Seiten hin geschlossen ist, und im Bereich des Bodens in eine Spaltöffnung (5) mündet, und
   b) das Polyurethan-Reaktionsgemisch in der Anstaukammer (4) aufgestaut wird, so dass am Boden der Anstaukammer über die gesamte Breite statischer Druck erzeugt wird, der zwischen 100 und 5000 Pascal liegt, und das Polyurethan-Reaktionsgemisch die Anstaukammer (4) von oben nach unten durchfließt, und
   c) das Polyurethan-Reaktionsgemisch anschließend durch die Spaltöffnung (5) aus der Anstaukammer (4) ausströmt und einen Spalt (6) durchströmt, wobei die Unterseite des Spalts von einem Transportband (7) gebildet wird und wobei der Spalt nach oben und unten und an den seitlichen Rändern geschlossen ist, und
   d) das Polyurethan-Reaktionsgemisch anschließend aus dem Spalt (6) in die Expansionskammer (8) hinein strömt und darin aufschäumt, wobei das Transportband (7) die Unterseite der Expansionskammer (8) bildet, und wobei die Expansionskammer (8) an den seitlichen Rändern geschlossen ist, und wobei sich der Strömungsquerschnitt der Expansionskammer in Transportrichtung des Transportbandes (7) erweitert, und
   e) das aufgeschäumte Polyurethan-Reaktionsgemisch durch eine Austrittsöffnung aus der Expansionskammer austritt und auf dem Transportband (7) aushärtet,

   wobei die mittlere Verweilzeit des Reaktionsgemisches vom Austritt aus dem Mischer (1) bis zum Verlassen der Anstaukammer (4) durch die Spaltöffnung (5) maximal 15 Sekunden beträgt.

2. Verfahren nach Anspruch 1, wobei das Reaktionsgemisch aus dem Mischer auf eine bewegte Aufgabe-Transportbahn (2) ausgetragen wird und anschließend im Bereich der Anstaukammer (4), des Spalts (6) und der Expansionskammer (8) von oben, unten und den Seiten zwischen bewegten Transportbahnen (7, 9, 12) geführt wird.

3. Verfahren nach Anspruch 1 oder 2, wobei das Polyurethan-Reaktionsgemisch die Anstaukammer (4) flüssig verlässt.

4. Verfahren nach Anspruch 1 bis 3, wobei der Spalt (6) in horizontaler Richtung ausgedehnt ist und horizontal verläuft und dass die Länge des Spaltes (6) in Strömungsrichtung in einem Bereich zwischen 5 und 100 cm liegt.

5. Verfahren nach Anspruch 4, wobei das Transportband (7) im Bereich des Spaltes (6) in Produktionsrichtung gegenüber der Horizontalen in Produktionsrichtung um einen Neigungswinkel $\delta$ nach oben geneigt ist, wobei der Neigungswinkel $\delta$ 0,1° bis 5° beträgt.

6. Verfahren nach einem der Ansprüche 1 bis 5, wobei die Anstaukammer (4) im Einlaufbereich konisch ausgestaltet ist.

7. Verfahren nach einem der Ansprüche 1 bis 6, wobei die mittlere Verweilzeit des Reaktionsgemisches vom Austritt aus dem Mischer (1) bis zum Verlassen der Anstaukammer (4) durch die Spaltöffnung (5) maximal 10 Sekunden beträgt.

8. Verfahren nach Anspruch 1, wobei das Reaktionsgemisch aus dem Mischer (1) direkt auf das Transportband (7) ausgetragen wird und das Transportband (7) anschließend mehrfach umgelenkt wird.

9. Vorrichtung zur Herstellung von Polyurethan-Blockschaum umfassend Vorratsbehälter für die Reaktivkomponenten Polyol und Isocyanat, Pumpen und Leitungen für die Dosierung der Reaktivkomponenten aus den Vorratsbehältern zu einem Mischer (1) enthaltend eine Ausströmöffnung (15) für den frei fließenden Austrag des Polyurethan-Reaktionsgemisches, sowie ein Transportband (7), auf welchem das Polyurethan-Reaktionsgemisch aufschäumen und aushärten kann, wobei

    a) unterhalb der mindestens einen Ausströmöffnung (15) eine Anstaukammer (4) angeordnet ist, die in vertikaler Richtung ausgedehnt und nach den Seiten hin geschlossen ist, und die eine Aufgabeöffnung (3) für die Zufuhr von Polyurethan-Reaktionsgemisch und im Bereich des Bodens eine Spaltöffnung (5) für den Austritt von Polyurethan-Reaktionsgemisch aufweist, wobei die Anstaukammer (4) im Einlaufbereich konisch ausgestaltet ist, wobei die Anstaukammer (4) in Strömungsrichtung eine Länge zwischen 1 cm und 50 cm hat, und
    b) die Anstaukammer (4) durch die Spaltöffnung (5) in einen Spalt (6) mündet, wobei die Unterseite des Spalts von einem Transportband (7) gebildet wird und wobei der Spalt nach oben und unten und an den seitlichen Rändern geschlossen ist, und
    c) der Spalt in die Expansionskammer (8) mündet, wobei das Transportband (7) die Unterseite der Expansionskammer (8) bildet, und wobei die Expansionskammer (8) an den seitlichen Rändern geschlossen ist, und wobei sich der Strömungsquerschnitt der Expansionskammer (8) in Transportrichtung des Transportbandes (7) erweitert, und
    d) die Expansionskammer (8) eine Austrittsöffnung aufweist, wobei das System aus Anstaukammer (4), Spalt (6) und Expansionskammer (8) mit Ausnahme der Aufgabeöffnung (3) in die Anstaukammer (4) hinein und der Austrittsöffnung aus der Expansionskammer (8) nach allen Seiten geschlossen ist.

10. Vorrichtung nach Anspruch 9, wobei der Spalt (6) in horizontaler Richtung ausgedehnt ist und horizontal verläuft, wobei die Länge des Spaltes (6) in Strömungsrichtung in einem Bereich von zwischen 5 und 100 cm liegt.

11. Vorrichtung nach Anspruch 10, wobei das Transportband (7) im Bereich des Spaltes (6) in Produktionsrichtung gegenüber der Horizontalen um einen Neigungswinkel δ nach oben geneigt ist, wobei der Neigungswinkel δ 0,1° bis 5° beträgt.

12. Vorrichtung nach einem der Ansprüche 9 bis 11, wobei unterhalb der Austrittsöffnung (15) das Transportband (7) so angeordnet ist, dass das Reaktionsgemisch aus dem Mischer (1) direkt auf das Transportband (7) ausgetragen werden kann, und das Transportband (7) anschließend mehrfach umgelenkt ist.

**Claims**

1. A continuous process for the production of polyurethane block foam, in which the reactive components polyol and isocyanate are fed in metered amounts to a mixer (1) and are mixed therein to form a polyurethane reaction mixture, and the polyurethane reaction mixture is applied to a conveyor belt (7) and foamed and cured thereon, wherein

    a) after mixing, the polyurethane reaction mixture is discharged in free-flowing manner from the mixer (1) through at least one outflow opening (15) and flows through the feed opening (3) into an accumulation chamber (4) which is extended in the vertical direction and closed at the sides and which opens in the region of the base into a gap opening (5), and
    b) the polyurethane reaction mixture accumulates in the accumulation chamber (4) so that static pressure is produced at the base of the accumulation chamber over the entire width, which is between 100 and 5,000 Pascal, and the polyurethane reaction mixture flows through the accumulation chamber (4) from top to bottom, and
    c) the polyurethane reaction mixture then flows through the gap opening (5) out of the accumulation chamber (4) and flows through a gap (6), the underside of the gap being formed by a conveyor belt (7) and the gap being closed at the top and bottom and at the lateral edges, and
    d) the polyurethane reaction mixture then flows from the gap (6) into the expansion chamber (8) and foams therein, the conveyor belt (7) forming the underside of the expansion chamber (8), and wherein the expansion chamber (8) being closed at the lateral edges, and the flow cross-section of the expansion chamber widening in the transport direction of the conveyor belt (7), and

e) the foamed polyurethane reaction mixture leaves the expansion chamber through an outlet opening and cures on the conveyor belt (7),

wherein the mean dwell time of the reaction mixture from emerging from the mixer (1) to leaving the accumulation chamber (4) through the gap opening (5) is not more than 15 seconds.

2. Process according to claim 1, wherein the reaction mixture is discharged from the mixer onto a moving feeding conveyor sheet (2) and is then guided in the region of the accumulation chamber (4), of the gap (6) and of the expansion chamber (8) from above, beneath and the sides between moving conveyor sheets (7, 9, 12).

3. Process according to claim 1 or 2, wherein the polyurethane reaction mixture leaves the accumulation chamber (4) in liquid form.

4. Process according to claims 1 to 3, wherein the gap (6) is extended in the horizontal direction and runs horizontally and that the length of the gap (6) in the flow direction is in a range from 5 to 100 cm.

5. Process according to claim 4, wherein the conveyor belt (7) in the region of the gap (6) is upwardly inclined relative to the horizontal by an angle of inclination $\delta$ in the flow direction, wherein the angle of inclination $\delta$ is from 0.1° to 5°.

6. Process according to one of claims 1 to 5, wherein the accumulation chamber (4) is in conical form in its intake region.

7. Process according to one of claims 1 to 6, wherein the mean dwell time of the reaction mixture from emerging from the mixer (1) to leaving the accumulation chamber (4) through the gap opening (5) is not more than 10 seconds.

8. Process according to claim 1, wherein the reaction mixture is discharged from the mixer (1) directly onto the conveyor belt (7), and the conveyor belt (7) is then deflected several times.

9. Device for the production of polyurethane block foam, comprising storage containers for the reactive components polyol and isocyanate, pumps and pipes for metering the reactive components from the storage containers to a mixer (1) containing an outflow opening (15) for discharging the polyurethane reaction mixture in a free-flowing manner, and a conveyor belt (7) on which the polyurethane reaction mixture can foam and cure, wherein

a) beneath the at least one outflow opening (15) there is arranged an accumulation chamber (4) which is extended in the vertical direction and closed at the sides and which has a feed opening (3) for the supply of polyurethane reaction mixture and, in the region of the base, a gap opening (5) for the delivery of polyurethane reaction mixture, wherein the accumulation chamber (4) is conical form in the intake region, wherein the accumulation chamber (4) has a length between 1 cm and 50 cm in the flow direction, and

b) the accumulation chamber (4) opens through the gap opening (5) into a gap (6), the underside of the gap being formed by a conveyor belt (7) and wherein the gap being closed at the top and bottom and at the lateral edges, and

c) the gap opens into the expansion chamber (8), wherein the conveyor belt (7) forming the underside of the expansion chamber (8) and wherein the expansion chamber (8) being closed at the lateral edges and wherein the flow cross-section of the expansion chamber (8) widening in the transport direction of the conveyor belt (7), and

d) the expansion chamber (8) has an outlet opening, wherein the system comprising the accumulation chamber (4), the gap (6) and the expansion chamber (8), with the exception of the feed opening (3) into the accumulation chamber (4) and the outlet opening from the expansion chamber (8), being closed on all sides.

10. Device according to claim 9, wherein the gap (6) is extended in the horizontal direction and extends horizontally, wherein the length of the gap (6) in the flow direction is in a range between 5 and 100 cm.

11. Device according to claim 10, wherein in the region of the gap (6) the conveyor belt (7) is upwardly inclined relative to the horizontal by an angle of inclination $\delta$ in the flow direction, wherein the angle of inclination $\delta$ is from 0.1° to 5°.

12. Device according to one of claims 9 to 11, wherein beneath the outlet opening (15) the conveyor belt (7) is arranged so that the reaction mixture can be discharged from the mixer (1) directly onto the conveyor belt (7) and the conveyor belt (7) is then deflected several times.

## Revendications

1. Procédé continu pour la fabrication d'une mousse de polyuréthane en bloc, selon lequel les composants réactifs polyol et isocyanate sont dosés dans un mélangeur (1) et y sont mélangés en un mélange réactionnel de polyuréthane, et le mélange réactionnel de polyuréthane est appliqué sur une bande de transport (7), y est moussé et durci, dans lequel

 a) le mélange réactionnel de polyuréthane est déchargé du mélangeur (1) après le mélange par au moins une ouverture de sortie (15) par écoulement libre et s'écoule par l'ouverture d'alimentation (3) dans une chambre d'accumulation (4), qui est étendue dans la direction verticale et fermée sur les côtés, et débouche dans la zone du fond dans une ouverture en fente (5), et

 b) le mélange réactionnel de polyuréthane s'accumule dans la chambre d'accumulation (4) de telle sorte qu'une pression statique soit générée au fond de la chambre d'accumulation sur l'ensemble de la largeur, qui est comprise entre 100 et 5 000 Pascal, et le mélange réactionnel de polyuréthane traverse la chambre d'accumulation (4) du haut vers le bas, et

 c) le mélange réactionnel de polyuréthane sort ensuite de la chambre d'accumulation (4) par l'ouverture en fente (5) et traverse une fente (6), le côté inférieur de la fente étant formé par une bande de transport (7) et la fente étant fermée en haut et en bas et sur les bords latéraux, et

 d) le mélange réactionnel de polyuréthane s'écoule ensuite depuis la fente (6) dans la chambre d'expansion (8) et y mousse, la bande de transport (7) formant le côté inférieur de la chambre d'expansion (8), et la chambre d'expansion (8) étant fermée sur les bords latéraux, et la section transversale d'écoulement de la chambre d'expansion s'élargissant dans la direction de transport de la bande de transport (7), et

 e) le mélange réactionnel de polyuréthane moussé sort de la chambre d'expansion par une ouverture de sortie et durcit sur la bande de transport (7),

 le temps de séjour moyen du mélange réactionnel depuis la sortie du mélangeur (1) jusqu'à la sortie de la chambre d'accumulation (4) par l'ouverture en fente (5) étant d'au plus 15 secondes.

2. Procédé selon la revendication 1, dans lequel le mélange réactionnel est déchargé du mélangeur sur une bande de transport d'alimentation mobile (2), puis acheminé dans la zone de la chambre d'accumulation (4), de la fente (6) et de la chambre d'expansion (8) entre des bandes de transport mobiles (7, 9, 12) en haut, en bas et sur les côtés.

3. Procédé selon la revendication 1 ou 2, dans lequel le mélange réactionnel de polyuréthane quitte la chambre d'accumulation (4) sous forme liquide.

4. Procédé selon les revendications 1 à 3, dans lequel la fente (6) est étendue dans la direction horizontale et est horizontale, et en ce que la longueur de la fente (6) dans la direction d'écoulement se situe dans une plage comprise entre 5 et 100 cm.

5. Procédé selon la revendication 4, dans lequel la bande de transport (7) est inclinée vers le haut dans la zone de la fente (6) dans la direction de production par rapport à l'horizontale dans la direction de production d'un angle d'inclinaison $\delta$, l'angle d'inclinaison $\delta$ étant de 0,1° à 5°.

6. Procédé selon l'une quelconque des revendications 1 à 5, dans lequel la chambre d'accumulation (4) est configurée sous forme conique dans la zone d'entrée.

7. Procédé selon l'une quelconque des revendications 1 à 6, dans lequel le temps de séjour moyen du mélange réactionnel depuis la sortie du mélangeur (1) jusqu'à la sortie de la chambre d'accumulation (4) par l'ouverture en fente (5) est d'au plus 10 secondes.

8. Procédé selon la revendication 1, dans lequel le mélange réactionnel est déchargé du mélangeur (1) directement sur la bande de transport (7) et la bande de transport (7) est ensuite détournée à plusieurs reprises.

9. Dispositif pour la fabrication d'une mousse de polyuréthane en bloc comprenant des contenants de stockage pour les composants réactifs polyol et isocyanate, des pompes et des conduites pour le dosage des composants réactifs à partir des contenants de stockage dans un mélangeur (1) contenant une ouverture de sortie (15) pour le déchargement en écoulement libre du mélange réactionnel de polyuréthane, ainsi qu'une bande de transport (7), sur laquelle le mélange réactionnel de polyuréthane peut mousser et durcir,

 a) une chambre d'accumulation (4) étant agencée sous ladite au moins une ouverture de sortie (15), qui est étendue dans la direction verticale et fermée sur les côtés, et qui comprend une ouverture d'alimentation (3) pour l'introduction du mélange réactionnel de polyuréthane et une ouverture en fente (5) dans la zone du fond pour la sortie du mélange réactionnel de polyuréthane, la chambre d'accumulation (4) étant configurée sous forme conique dans la zone d'entrée, la chambre d'accumulation (4) ayant dans la direction d'écoulement une longueur comprise entre 1 cm et 50 cm, et

b) la chambre d'accumulation (4) débouchant par l'ouverture en fente (5) dans une fente (6), le côté inférieur de la fente étant formé par une bande de transport (7) et la fente étant fermée en haut et en bas et sur les bords latéraux, et

c) la fente débouchant dans la chambre d'expansion (8), la bande de transport (7) formant le côté inférieur de la chambre d'expansion (8) et la chambre d'expansion (8) étant fermée sur les bords latéraux, et la section transversale d'écoulement de la chambre d'expansion (8) s'élargissant dans la direction de transport de la bande de transport (7), et

d) la chambre d'expansion (8) comprenant une ouverture de sortie, le système constitué par la chambre d'accumulation (4), la fente (6) et la chambre d'expansion (8) à l'exception de l'ouverture d'alimentation (3) dans la chambre d'accumulation (4) et de l'ouverture de sortie de la chambre d'expansion (8) étant fermé de tous les côtés.

10. Dispositif selon la revendication 9, dans lequel la fente (6) est étendue dans la direction horizontale et est horizontale, la longueur de la fente (6) dans la direction d'écoulement se situant dans une plage comprise entre 5 et 100 cm.

11. Dispositif selon la revendication 10, dans lequel la bande de transport (7) est inclinée vers le haut dans la zone de la fente (6) dans la direction de production par rapport à l'horizontale d'un angle d'inclinaison $\delta$, l'angle d'inclinaison $\delta$ étant de 0,1° à 5°.

12. Dispositif selon l'une quelconque des revendications 9 à 11, dans lequel la bande de transport (7) est agencée sous l'ouverture de sortie (15) de telle sorte que le mélange réactionnel puisse être déchargé du mélangeur (1) directement sur la bande de transport (7) et la bande de transport (7) est ensuite détournée à plusieurs reprises.

EP 2 086 738 B1

Fig. 1

Figur 2

**IN DER BESCHREIBUNG AUFGEFÜHRTE DOKUMENTE**

**In der Beschreibung aufgeführte Patentdokumente**

- GB 1392859 A
- GB 1487848 A
- DE 2557572 A
- EP 0689920 A
- DE 2726084 A
- EP 25084 A
- DE 4425319 A1
- US 5844015 A
- EP 1328388 A
- DE 69112786 A

**In der Beschreibung aufgeführte Nicht-Patentliteratur**

- Kunststoff-Handbuch. Hanser-Verlag, 1993, vol. 7, 197-200
- Kunststoff-Handbuch. 1993, vol. 7, 197-200